# EUROPEAN PATENT SPECIFICATION

(11) **EP 3 346 693 B1**
(45) Date of publication and mention of the grant of the patent: **24.03.2021**
(21) Application number: 17150867.4
(22) Date of filing: 10.01.2017
(51) Int. Cl.: H04N 5/225, G02B 27/00, B60R 1/00

(54) **AN IMAGING DEVICE FOR A MOTOR VEHICLE, AND A METHOD OF MOUNTING AN IMAGING DEVICE IN A MOTOR VEHICLE**
ABBILDUNGSVORRICHTUNG FÜR EIN KRAFTFAHRZEUG UND VERFAHREN ZUR MONTAGE EINER ABBILDUNGSVORRICHTUNG IN EINEM KRAFTFAHRZEUG
DISPOSITIF D'IMAGERIE POUR UN VÉHICULE AUTOMOBILE ET PROCÉDÉ DE MONTAGE D'UN DISPOSITIF D'IMAGERIE DANS UN VÉHICULE AUTOMOBILE

(43) Date of publication of application: 11.07.2018
(73) Proprietor: Veoneer Sweden AB, 447 83 Vårgårda (SE)
(72) Inventor: Wigren, Roger, 59074 Ljungsbro (SE)
(74) Representative: Müller Verweyen

(56) References cited:
- WO-A1-2017/034832
- JP-A- 2001 285 701
- JP-A- 2009 120 135
- JP-A- 2011 095 321
- US-A- 6 072 529
- US-A1- 2007 071 429
- US-A1- 2012 293 670

## Description

The invention relates to an imaging device for capturing images from a surrounding of a motor vehicle, said imaging device comprising a lens objective having a longitudinal axis and an image sensor adapted to convert incident light into an electrical signal containing image data and having a sensitive plane.

Such imaging devices are known, see for example US 2007 0165967 A1, and usually have a large field of view for imaging both the road surface in the lower image region as well as far away objects extending above ground, including moving objects like other vehicles and pedestrians and static objects like traffic lights, traffic signs, buildings, trees etc. Due to the large field of view extending over a large depth range it is challenging to provide a sharp image in all parts of the image.

JP 2009 120135 A discloses a fisheye camera for a motor vehi-cle, where the optical axis of the fisheye lens is vertically displaced downwards relative to the center of the image sensor.

JP 2011 095321 A discloses another fisheye camera for a motor vehicle.

JP 2001 285701 A and WO 2017/034832 A1 each disclose an on-vehicle camera device with the features of the preamble of claim 1.

US 2012 0293670 A1 discloses a measurement method for correcting tilt angles of an image sensor relative to the lens axis.

The object of the invention is to provide an imaging device having an improved depth of field or effective focus range, in order to focus simultaneously on objects in relatively close distance and on objects at a long range simultaneously with a lens objective having fixed focal distance.

The invention solves this object with the features of the independent claims.

By arranging the image sensor with a non-zero tilt angle α relative to the lens objective axis A the Depth of Field (DoF) or the (effective) focus range can be optimized for all parts of the image, and in particular both for far away objects usually present in an upper image region as well as closer objects, like the road surface, usually present in a lower image region. Therefore, according to the invention the average sharpness and the average image quality can be improved and the reliability of the vision system enhanced.

Close objects of interest are for example road lane markings or road surface unevenness features, like pot holes or speed bumps. These objects are usually found in the lower portion of the image captured by the imaging device, like camera. Objects further away may for example be traffic signs, traffic lights, etc. These objects are usually found in the upper portion of the image. By tilting the image sensor array relative to the lens arrangement, the focus can be optimized in both close and long distance.

According to the invention, the image sensor is tilted away from the lens objective in an upper region of the image sen-sor. This feature acknowledges the fact that, as mentioned above, far away objects are usually present in an upper image region while closer objects, like the road surface, are usually present in a lower image region.

According to the invention, the tilt angle of the image sensor is at least 0.0001 rad or 0.006 degree relative to the lens objective axis, preferably at least 0.0003 rad. Furthermore, according to the invention the tilt angle of the image sensor is at most 0.003 rad relative to the lens objective axis. Altogether, the tilt angle is preferably in the range between 0.0003 to 0.003 rad relative to the lens objective axis, more preferably between 0.0006 to 0.002 rad, and most preferably approximately 0.001 rad. In the above preferred embodiments, although the tilt angle is comparatively very small, nevertheless a significant DoF improvement can be achieved. The tilt angle is advantageously restricted to values which allow to match a pre-set maximum focal depth or image plane depth, which may be for example about 10 microns.

In the following the invention shall be illustrated on the basis of preferred embodiments with reference to the accompanying drawings, wherein:
- Fig. 1: shows a schematic drawing of a vision system; and
- Fig. 2: shows an imaging device according to the invention.

The vision system 10 is mounted in a motor vehicle and comprises an imaging apparatus 11 for capturing images of a region surrounding the motor vehicle, for example a region in front of the motor vehicle. The imaging apparatus 11 comprises one or more optical imaging devices 12, in particular cameras, preferably operating in the visible and/or infrared wavelength range, where infrared covers near IR with wavelengths below 5 microns and/or far IR with wavelengths beyond 5 microns. In some embodiments the imaging apparatus 11 comprises a plurality imaging devices 12 in particular forming a stereo imaging apparatus 11. In other embodiments only one imaging device 12 forming a mono imaging apparatus 11 can be used.

The imaging apparatus 11 is coupled to a data processing device 14 adapted to process the image data received from the imaging apparatus 11. The data processing device 14 is preferably a digital device which is programmed or programmable and preferably comprises a microprocessor, microcontroller a digital signal processor (DSP), and/or a microprocessor part in a System-On-Chip (SoC) device, and preferably has access to, or comprises, a data memory 25. The data processing device 14 may comprise a dedicated hardware device, like a Field Programmable Gate Array (FPGA) or an Application Specific Integrated Circuit (ASIC), or an FPGA and/or ASIC part in a System-On-Chip (SoC) device, for performing certain functions, for example controlling the capture of images by the imaging apparatus 11, receiving the electrical signal containing the image information from the imaging apparatus 11, rectifying or warping pairs of left/right images into alignment and/or creating disparity or depth images. The data processing device 14, or part of its functions, can be realized by a System-On-Chip (SoC) device comprising, for example, FPGA, DSP, ARM and/or microprocessor functionality. The data processing device 14 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of driver assistance device 18 are performed automatically and continuously during driving in real time.

Image and data processing carried out in the processing device 14 advantageously comprises identifying and preferably also classifying possible objects (object candidates) in front of the motor vehicle, such as pedestrians, other vehicles, bicy-clists and/or large animals, tracking over time the position of objects or object candidates identified in the captured images, and activating or controlling at least one driver assistance device 18 depending on an estimation performed with respect to a tracked object, for example on an estimated collision probability. The driver assistance device 18 may in particular comprise a display device to display information relating to a detected object. However, the invention is not limited to a display device. The driver assistance device 18 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as braking or steering control devices.

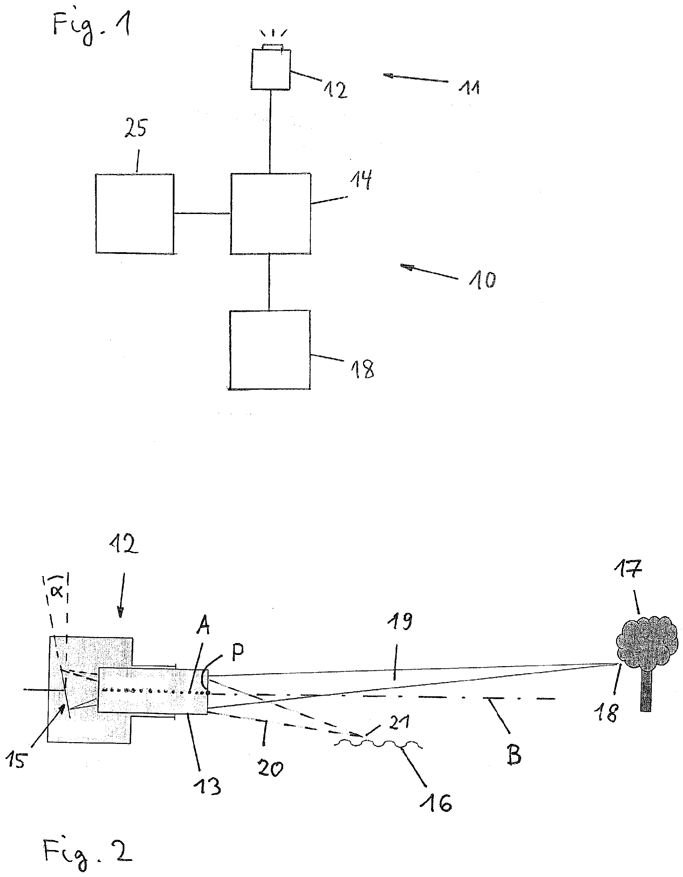

As shown in Figure 2, the at least one imaging device 12 comprises an images sensor 15 and a lens objective 13 comprising one or more optical elements, in particular lenses, and having a fixed, non-varying focal distance. Light or radiation from objects outside the vehicle passes through the lens objective 13 and is focussed by the lens objective 13 onto an image plane approximately coinciding with a sensitive plane of the image sensor 15. The image sensor 15 converts the incident light into an electrical signal containing the image data. The lens objective 13 has an optical axis A which is usually defined by the central axis of the optical elements in the lens objective 13. The image sensor 15 is preferably rectangular and preferably has an upper edge, a lower edge and two side edges in the mounted state of the imaging device 12.

Figure 2 shows a horizontal plane B through the central point P of the entrance face of the lens objective 13. In the point P the optical axis A of the lens objective 13 and the horizontal plane B intersect. The imaging device 12 may be arranged horizontally such that the optical axis A lies in the horizontal plane B, but this is not necessarily the case. In any case, the imaging device 12 is arranged such that both the road surface 16 in the low environment as well as far away objects extending above ground, here a tree 17, can be imaged by the imaging device 12. In other words, both light rays 19 originating from sources 18 above the horizontal plane B, and thus declining towards the lens objective 13, as well as light rays 20 originating from sources 21 below the horizontal plane B, and thus raising towards the lens objective 13, can fall into the lens objective 13 and be captured by the image sensor 12.

Conventionally the image sensor 15, or the sensitive plane thereof, is arranged normal or perpendicularly to the optical axis A of the lens objective 13. According to the present invention, the image sensor 15, or the sensitive plane thereof, is tilted relative to the optical axis A of the lens objective 13, namely around a horizontal axis oriented perpendicularly to the optical axis A of the lens objective 13.

As seen in Figure 2, the sensitive plane of the image sensor 15 is preferably tilted away from the lens objective 13 in an upper region and, more specifically, at an upper edge of the image sensor. In other words, the distance of the image sensor 15 to the lens objective is larger at its upper edge than at a central horizontal line intersected by the optical axis A, and lower at its lower edge than at the central horizontal line. In this manner, the imaging quality of far-away objects above the horizontal plane B and closer objects below the horizontal plane B can be improved.

The tilt angle of the sensitive plane of the image sensor 15 is at least 0.0001 rad or 0.006 degree relative to the lens objective axis A, more preferably at least 0.0003 rad. Furthermore, the tilt angle of the sensitive plane of the image sensor 15 is at most 0.003 rad relative to the lens objective axis. Altogether, the sensitive plane of the image sensor 15 is preferably tilted in the range between 0.0003 to 0.003 rad relative to the lens objective axis, more preferably between 0.0006 to 0.002 rad, most preferably approximately 0.001 rad.

## Claims

1. An imaging device (12) for capturing images from a surrounding of a motor vehicle, said imaging device (12) comprising a lens objective (13) having a longitudinal axis A and an image sensor (15) adapted to convert incident light into an electrical signal containing image data and having a sensitive plane, wherein the image sensor (15) is arranged with a non-zero tilt angle α relative to the lens objective axis A around a horizontal axis oriented perpendicularly to the lens objective axis A, wherein the image sensor (15) is tilted away from the lens objective (13) in an upper region of the image sensor (15), **characterized in that** the tilt angle α is in the range between 0.0001 to 0.002 rad.

2. The imaging device as claimed in claim 1, **characterized in that** the tilt angle α is in the range between 0.0003 to 0.002 rad.

3. The imaging device as claimed in claim 1, **characterized in that** the tilt angle α is in the range between 0.0006 to 0.002 rad.

4. The imaging device as claimed in any one of the preceding claims, **characterized in that** tilt angle α is restricted to values which allow to match a pre-set maximum focal depth or image plane depth.

5. A vision system for a motor vehicle, comprising at least one imaging device (12) as claimed in any one of the preceding claims, and a processing device (14) adapted to perform image processing of images captured by said at least one imaging device (12) in order to detect objects in the surrounding of a motor vehicle.

6. A motor vehicle comprising at least one imaging device (12) as claimed in any one of claims 1 to 4, **characterized in that** the imaging device (12) is mounted in the motor vehicle such that the image sensor (15) is tilted away from the lens objective (13) in an upper region of the image sensor (15).

7. The motor vehicle as claimed claim 6, **characterized in that** the imaging device (12) is mounted in the motor vehicle such that the imaging device (12) is adapted to capture light both from above and below a horizontal plane B through a central entrance point P of the lens objective (13).

8. A method of mounting an imaging device (12) as claimed in any one of claims 1 to 4 in a motor vehicle, **characterized by** mounting the imaging device (12) in the motor vehicle such that the image sensor (15) is tilted away from the lens objective (13) in an upper region of the image sensor (13).

## Patentansprüche

1. Eine Bildaufnahmevorrichtung (12) zum Aufnehmen von Bildern vom Umfeld eines Kraftfahrzeugs, wobei die Bildaufnahmevorrichtung (12) ein Linsenobjektiv (13) mit einer Längsachse A und einen Bildsensor (15) aufweist, der geeignet ist, einfallendes Licht in ein elektrisches Signal umzuwandeln, das Bilddaten enthält, und der eine sensitive Ebene aufweist, wobei der Bildsensor (15) mit einem von Null verschiedenen Kippwinkel α relativ zur Linsenobjektivachse A um eine senkrecht zur Linsenobjektivachse A orientierte Horizontalachse angeordnet ist, wobei der Bildsensor (15) in einem oberen Bereich des Bildsensors (15) vom Linsenobjektiv (13) weg gekippt ist, **dadurch gekennzeichnet, dass** der Kippwinkel α im Bereich zwischen 0,0001 bis 0,002 rad liegt.

2. Die Bildaufnahmevorrichtung nach Anspruch 1, **dadurch gekennzeichnet, dass** der Kippwinkel α im Bereich zwischen 0,0003 bis 0,002 rad liegt.

3. Die Bildaufnahmevorrichtung nach Anspruch 1, **dadurch gekennzeichnet, dass** der Kippwinkel α im Bereich zwischen 0,0006 und 0,002 rad liegt.

4. Bildaufnahmevorrichtung nach einem der vorhergehenden Ansprüche, **dadurch gekennzeichnet, dass** der Kippwinkel α auf Werte begrenzt ist, die es erlauben, eine voreingestellte maximale Fokustiefe oder Bildebenentiefe zu erreichen.

5. Ein Sichtsystem für ein Kraftfahrzeug, das mindestens eine Bildaufnahmevorrichtung (12) nach einem der vorhergehenden Ansprüche und eine Verarbeitungsvorrichtung (14) umfasst, die dazu eingerichtet ist, eine Bildverarbeitung der von der mindestens einen Bildaufnahmevorrichtung (12) aufgenommenen Bilder durchzuführen, um Objekte im Umfeld eines Kraftfahrzeugs zu erkennen.

6. Ein Kraftfahrzeug mit mindestens einer Bildaufnahmevorrichtung (12) nach einem der Ansprüche 1 bis 4, **dadurch gekennzeichnet, dass** die Bildaufnahmevorrichtung (12) so im Kraftfahrzeug montiert ist, dass der Bildsensor (15) in einem oberen Bereich des Bildsensors (15) vom Linsenobjetiv (13) weggekippt ist.

7. Das Kraftfahrzeug nach Anspruch 6, **dadurch gekennzeichnet, dass** die Bildaufnahmevorrichtung (12) derart im Kraftfahrzeug montiert ist, dass die Bildaufnahmevorrichtung (12) dazu eingerichtet ist, Licht sowohl von oberhalb als auch von unterhalb einer horizontalen Ebene B durch einen zentralen Eintrittspunkt P des Linsenobjektivs (13) zu erfassen.

8. Ein Verfahren zur Montage einer Bildaufnahmevorrichtung (12) nach einem der Ansprüche 1 bis 4 in einem Kraftfahrzeug, **dadurch gekennzeichnet, dass** die Bildaufnahmevorrichtung (12) in dem Kraftfahrzeug so montiert wird, dass der Bildsensor (15) in einem oberen Bereich des Bildsensors (13) vom Linsenobjetiv (13) weggekippt ist.

## Revendications

1. Un dispositif d'imagerie (12) destiné à la capture d'images d'un environnement d'un véhicule automobile, ledit dispositif d'imagerie (12) comprenant un objectif à lentille (13) présentant un axe longitudinal A et un capteur d'image (15) adapté pour convertir la lumière incidente en un signal électrique contenant des données d'image et présentant un plan de sensibilité, le capteur d'image (15) étant agencé selon un angle d'inclinaison α non nul par rapport à l'axe A de l'objectif à lentille autour d'un axe horizontal orienté perpendiculairement à l'axe A de l'objectif à lentille, le capteur d'image (15) étant incliné dans la direction opposée à l'objectif à lentille (13) dans une zone supérieure du capteur d'image (15), **caractérisé en ce que** l'angle d'inclinaison α est compris dans la plage allant de 0,0001 à 0,002 rad.

2. Le dispositif d'imagerie selon la revendication 1, **caractérisé en ce que** l'angle d'inclinaison α est compris dans la plage allant de 0,0003 à 0,002 rad.

3. Le dispositif d'imagerie selon la revendication 1, **caractérisé en ce que** l'angle d'inclinaison α est compris dans la plage allant de 0,0006 à 0,002 rad.

4. Le dispositif d'imagerie selon l'une quelconque des revendications précédentes, **caractérisé en ce que** l'angle d'inclinaison α est limité à des valeurs qui permettent de correspondre à une profondeur focale ou une profondeur de plan d'image maximale préréglée.

5. Un système de vision pour un véhicule automobile, comprenant au moins un dispositif d'imagerie (12) selon l'une quelconque des revendications précédentes, et un dispositif de traitement (14) adapté pour effectuer un traitement d'image pour des images capturées par ledit au moins un dispositif d'imagerie (12) afin de détecter des objets dans l'environnement d'un véhicule automobile.

6. Un véhicule automobile comprenant au moins un dispositif d'imagerie (12) selon l'une quelconque des revendications 1 à 4, **caractérisé en ce que** le dispositif d'imagerie (12) est monté dans le véhicule à moteur de telle manière que le capteur d'image (15) est incliné dans la direction opposée à l'objectif à lentille (13) dans une zone supérieure du capteur d'image (15).

7. Le véhicule automobile selon la revendication 6, **caractérisé en ce que** le dispositif d'imagerie (12) est monté dans le véhicule automobile de telle manière que le dispositif d'imagerie (12) est adapté pour capturer de la lumière venant aussi bien de dessus que de dessous un plan horizontal B passant par un point d'entrée central P de l'objectif à lentille (13).

8. Un procédé de montage d'un dispositif d'imagerie (12) selon l'une quelconque des revendications 1 à 4 dans un véhicule à moteur, **caractérisé par** le montage du dispositif d'imagerie (12) dans le véhicule à moteur de telle manière que le capteur d'image (15) est incliné dans la direction opposée à l'objectif à lentille (13) dans une zone supérieure du capteur d'image (13).
